# DEMANDE DE BREVET EUROPEEN

(11) **EP 0 917 815 A1**
(43) Date de publication de la demande: **26.05.1999**
(21) Numéro de dépôt: 98402898.5
(22) Date de dépôt: 20.11.1998
(51) Int. Cl.: A01B 35/28, A01B 49/06

(54) **Herse rotative/rouleau à usage agricole**

(30) Priorité: 21.11.1997 FR 9714637
(71) Demandeur: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel

(57) **Abrégé**

L'invention est relative à une herse rotative/rouleau, du type dans lequel un mandrin tournant autour d'un axe sensiblement horizontal supporte une pluralité d'outils qui sont fixés sur le pourtour du mandrin dans des directions sensiblement radiales.

Dans un plan perpendiculaire à l'axe du mandrin (1), les outils (3) ont une forme sensiblement en arc de cercle, la tangente à l'extrémité (3a) convexe centrale de chaque outil formant à son point de contact avec le mandrin (1) un angle faible avec la tangente à la surface du mandrin (1) en ce point et la tangente à l'extrémité convexe externe de l'outil formant un angle voisin de 90° avec la ligne radiale qui rejoint l'extrémité convexe de l'outil (3b) à l'axe du mandrin (2).

## Description

La présente invention a pour objet une herse rotative/rouleau à usage agricole qui permet à l'aide d'un seul engin de réaliser un travail de hersage, c'est-à-dire une désagrégation des mottes de terre qui subsistent après un labour et un travail de roulage qui consiste à aplatir le terrain en le comprimant.

Elle a également pour objet un procédé pour procéder au semage de graines à l'aide de cette herse rotative/rouleau.

On connaît déjà des engins de ce type qui permettent de réaliser un tel travail mais qui ne donne pas entière satisfaction du fait que si le hersage est en général satisfaisant, le roulage du sol ne s'effectue pas dans de bonnes conditions.

La présente invention vise à palier cet inconvénient et à élargir les utilisations de tels engins.

La présente invention a pour objet une herse rotative/rouleau, du type dans lequel un mandrin tournant autour d'un axe sensiblement horizontal supporte une pluralité d'outils du mandrin qui sont fixés sur le pourtour dans des directions sensiblement radiales, cet engin étant caractérisé par le fait que, dans un plan perpendiculaire à l'axe du mandrin, les outils ont une forme sensiblement en arc de cercle, la tangente à l'extrémité convexe centrale de chaque outil faisant à son point de contact avec le mandrin, un angle faible avec la tangente à la surface du mandrin en ce point et par le fait que la tangente à l'extrémité convexe externe de l'outil présente un angle voisin de 90° avec la ligne radiale qui joint l'extrémité convexe de l'outil à l'axe du mandrin.

Selon un mode de réalisation préféré de l'invention, la tangente à l'extrémité convexe centrale de l'outil à son point de raccordement avec le mandrin fait avec la tangente à ce dernier un angle compris entre 20 et 30°, tandis que l'extrémité externe convexe de l'outil a une tangente qui fait un angle de 70 à 90° avec la ligne radiale qui relie l'extrémité externe convexe de l'outil à l'axe du mandrin.

Conformément à l'invention, les outils peuvent être disposés, par exemple, par groupes de quatre, dans des plans parallèles perpendiculaires à l'axe du mandrin.

Chaque groupe d'outils est avantageusement décalé angulairement par rapport au groupe voisin, de sorte que les extrémités des outils se trouvent sur des hélices ayant pour axe l'axe du mandrin.

Conformément à l'invention, la herse rotative peut être libre en rotation, mais il peut être avantageux de l'entraîner positivement en lui imposant une vitesse qui est supérieure, par exemple de 20 à 150 %, à la vitesse de rotation qu'elle prendrait spontanément en étant tracté sur le sol, en raison de la résistance à l'avancement qui résulte de l'enfoncement des outils dans le sol.

Les outils peuvent avoir des sections de forme diverse par exemple rectangulaire ou circulaire.

Conformément à l'invention, il est possible de rapporter de manière amovible sur la face avant de chaque outil une pièce d'usure qui peut être facilement changée lorsque cela est nécessaire. Il est aussi possible de réaliser l'outil avec une partie centrale fixe solidaire du mandrin et une partie constituée par une pièce d'usure fixée par exemple un boulon, de telle sorte que cette pièce d'usure peut être facilement remplacée lorsque cela est nécessaire.

La herse rotative/rouleau selon l'invention peut être avantageusement utilisée en combinaison avec un semoir traditionnel en ligne qui est placé soit devant, soit derrière la herse rotative/rouleau, laquelle est soit perpendiculaire à la direction du semis soit de préférence orientée selon une direction inclinée par rapport à cette direction.

On obtient de cette manière une excellente préparation de la terre qui permet de réaliser le semis dans de bonnes conditions. Selon un mode de réalisation perfectionné de l'invention, la herse rotative/rouleau selon l'invention peut être utilisée comme semoir qui effectue simultanément les trois opérations de hersage, de roulage et d'ensemencement.

Dans une première variante, on dispose au-dessus de la herse rotative/rouleau un semoir en ligne de type conventionnel que l'on munit de tubulures multiples qui conduisent les graines jusqu'au voisinage du sol en passant entre les outils de la herse en avant du mandrin.

Dans une seconde variante, les outils décrits ci-dessus présentent la caractéristique supplémentaire d'avoir une structure tubulaire dont l'extrémité assujettie au mandrin communique avec un orifice de ce dernier lequel, lors de la rotation de la herse, vient en communication avec un orifice fixe communiquant avec une enceinte fixe placée à l'intérieur du mandrin, de sorte que lorsque l'outil concerné est situé en partie basse avec son extrémité dans le sol, un jet de fluide tel que de l'air ou de l'eau contenant des graines peut être injecté dans le canal intérieur de l'outil pour aboutir dans le sol, les graines étant ainsi transportées à l'endroit et à la profondeur voulue au fur et à mesure de l'avance de la herse rotative.

Conformément à l'invention, les outils peuvent avoir une forme tubulaire jusqu'à leur extrémité qui délivre les graines.

Dans une variante, il suffit que la forme tubulaire soit celle de la partie de l'outil qui est raccordé au mandrin tandis que l'extrémité libre de l'outil présente une section ouverte analogue à celle d'une cuillère ou à un U.

On comprend qu'avec un tel dispositif, les graines propulsées par le courant de fluide liquide ou gazeux circulant à l'intérieur du mandrin sont propulsées par les outils uniquement lorsque les extrémités de ces derniers se trouvent dans le sol, grâce à l'obturateur rotatif constitué par la combinaison du mandrin et de la partie fixe des outils.

De surcroît la propulsion des graines par un courant d'eau présente l'avantage de réaliser un arrosage local autour des graines ce qui facilite et accélère leur germination.

La présente invention a également pour objet un procédé pour réaliser simultanément les opérations de hersage, roulage et semage de graines, caractérisé par le fait que l'on envoie dans des canaux pratiqués à l'intérieur des outils de la herse rotative/rouleau selon l'invention un fluide sous pression transportant des graines au moment où l'outil passe en position basse de sa course de manière à déposer les graines dans le sol.

Conformément à l'invention, le fluide peut être constitué par un liquide tel que de l'eau ou un gaz tel que de l'air.

Dans une variante, les graines peuvent être mélangées à d'autres particules telles que du sable, des engrais ou des agents fongicides.

Dans une autre variante, le fluide peut comporter un épaississant un gélifiant ou un émulsionnant ce qui le rend plus ou moins visqueux ou pâteux de manière à assurer une répartition plus uniforme des graines.

Dans le but de mieux faire comprendre l'invention, on va en décrire maintenant à titre d'illustration et sans aucun caractère limitatif plusieurs modes de réalisation pris comme exemples et représentés sur le dessin annexé dans lequel :
- la figure 1 est une vue schématique en coupe transversale d'un premier mode de réalisation de la herse rotative/rouleau selon l'invention,
- la figure 2 est une vue en coupe à plus grande échelle représentant les angles A et B qui définissent un mode de réalisation préféré de l'invention,
- la figure 3 est une vue en coupe partielle d'un mode de réalisation de l'invention dans lequel les outils sont réalisés en deux parties pour permettre le remplacement de la partie qui est la plus soumise à l'usure,
- la figure 4 est une vue schématique de dessus représentant l'utilisation conjointe d'un semoir en ligne et d'une herse rotative/rouleau selon l'invention,
- la figure 5 est une vue schématique en coupe représentant une variante perfectionnée de la herse rotative/rouleau selon l'invention, lui permettant de remplir la fonction de semoir en ligne et,
- la figure 6 représente une variante de l'invention selon laquelle un distributeur de graines est disposé au-dessus de la herse rotative/rouleau.

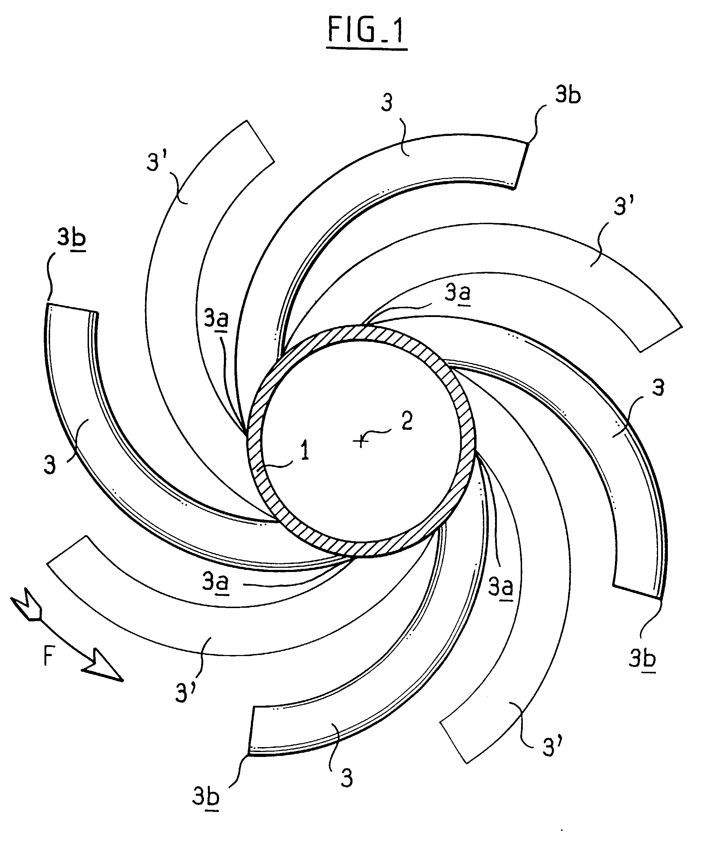

On a schématiquement représenté sur la figure 1 le mandrin 1 qui est constitué par un tube creux soutenu par ses deux extrémités pour pivoter autour de son axe 2 schématiquement représenté.

Dans ce mode de réalisation, quatre outils 3 sont disposés régulièrement autour du mandrin 1 dans un plan perpendiculaire à celui-ci.

Conformément à l'invention, l'extrémité centrale convexe 3a de chaque outil 3 est reliée au mandrin 1 en faisant un angle faible avec la tangente au mandrin au point de raccordement.

On voit également que, conformément à l'invention, l'extrémité convexe externe 3b de chaque outil présente une tangente sensiblement perpendiculaire à la ligne qui relie l'axe 2 du mandrin 1 à l'extrémité convexe externe 3b de l'outil.

On a représenté en traits plus fins un autre groupe de quatre outils 3' qui se trouvent en arrière du plan de figure et qui sont décalés de 45° par rapport au groupe d'outils 3 qui vient d'être décrit.

Dans un autre mode de réalisation, non représenté sur le dessin, les différents groupes d'outils peuvent être décalés d'un angle plus faible de manière à ce que les extrémités externes 3b des outils se situent autour du mandrin selon des hélices dont le pas est plus ou moins grand.

On a représenté par la flèche F le sens de rotation de la herse rotative lorsqu'elle est tractée en se déplaçant vers la gauche de la figure 1 de manière à ce que les outils pénètrent progressivement dans le sol en le comprimant.

La forme donnée aux outils selon l'invention améliore considérablement l'efficacité du rouleau tout en assurant parfaitement la fonction de la herse rotative qui consiste à briser les mottes de terre.

En effet, grâce à la forme donnée aux outils selon l'invention, ces derniers pénètrent progressivement dans le sol lors de leur rotation en présentant toujours une surface sensiblement horizontale en leur point le plus bas.

L'effet de rouleau se trouve ainsi fortement amélioré.

Lors de son fonctionnement, le mandrin est positionné de manière à ce que sa périphérie soit située à une distance relativement faible du sol pour que les outils 3 puissent pénétrer dans ce dernier.

Conformément à l'invention, il est avantageux d'entraîner positivement le mandrin en rotation pour lui donner une vitesse légèrement supérieure, par exemple de 20 %, à la vitesse qu'il prendrait spontanément s'il était monté fou sur l'axe du mandrin en étant seulement traîné sur le sol.

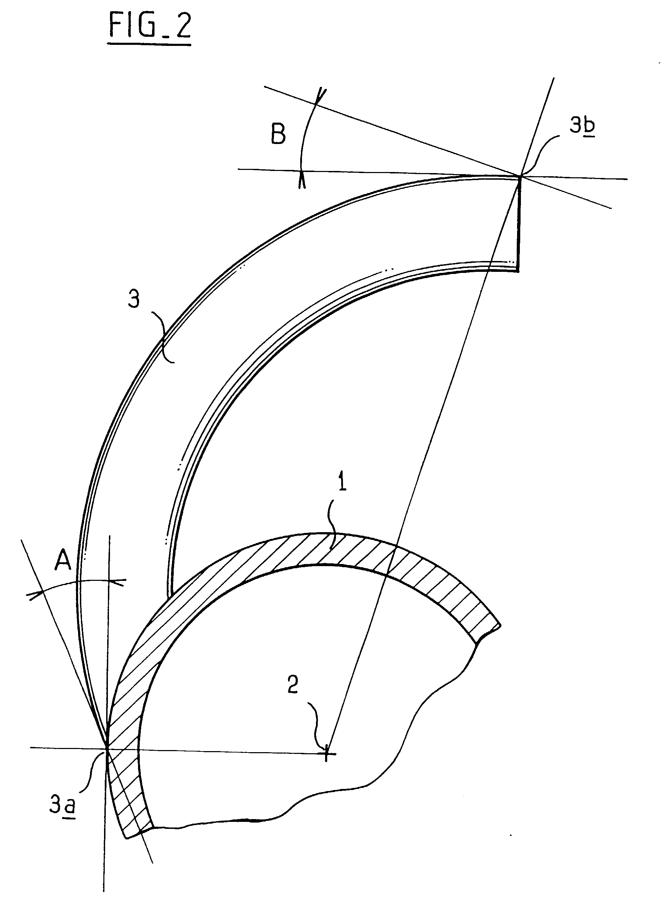

On a représenté à plus grande échelle sur la figure 2, les angles qui définissent selon l'invention, la forme caractéristique des outils à leurs extrémités.

Comme on le voit sur la figure 2, l'angle A est défini par la tangente du mandrin au point 3a où se raccorde la face convexe de l'outil 3 et la tangente à la face convexe de l'outil 3 en ce même point 3a. L'angle B est défini au point 3b à l'extrémité de l'outil, par la tangente à la face convexe de l'outil 3 et la perpendiculaire à la ligne qui joint ce point 3b au centre 2 du mandrin.

Selon un mode de réalisation préféré de l'invention, l'angle A est compris entre environ 20 et 30° alors que l'angle B est compris entre environ 70 et 90°.

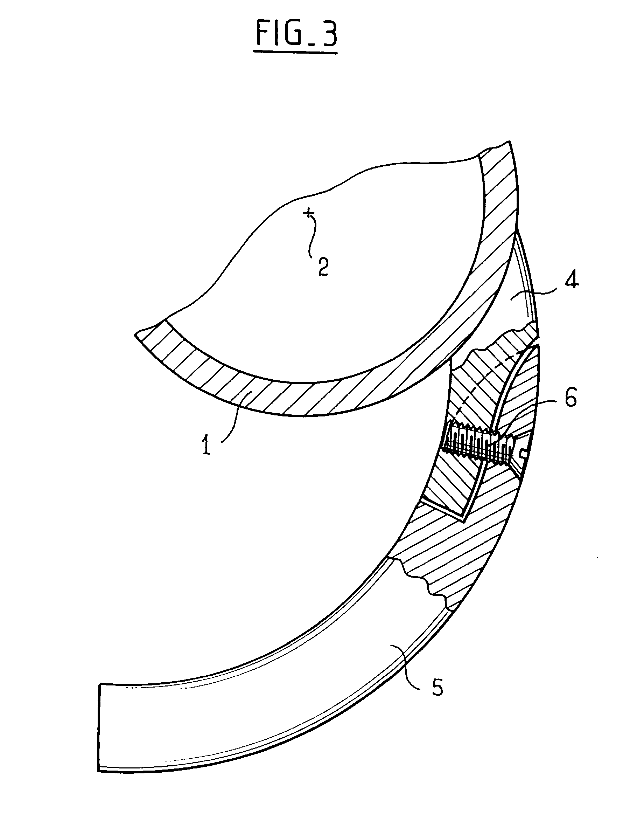

On a représenté sur la figure 3, un autre mode de réalisation d'un outil selon l'invention qui est constitué en deux parties.

Une première partie 4 est solidaire du mandrin 1 tandis qu'une seconde partie 5, constituant une pièce d'usure, est reliée à la première partie 4 à l'aide d'une vis 6 ou d'un boulon.

La partie 4 peut être pleine, par exemple de section circulaire ou rectangulaire.

La partie 5 peut avoir la même section que celle de la partie 4. Elle peut également avoir une section différente par exemple une section en forme de U.

Selon ce mode de réalisation, on peut facilement changer les parties 5 des enseignes qui s'usent les premières.

On peut également adapter sur la herse des parties 5 qui ont des formes ou des longueurs différentes en fonction des besoins de la culture.

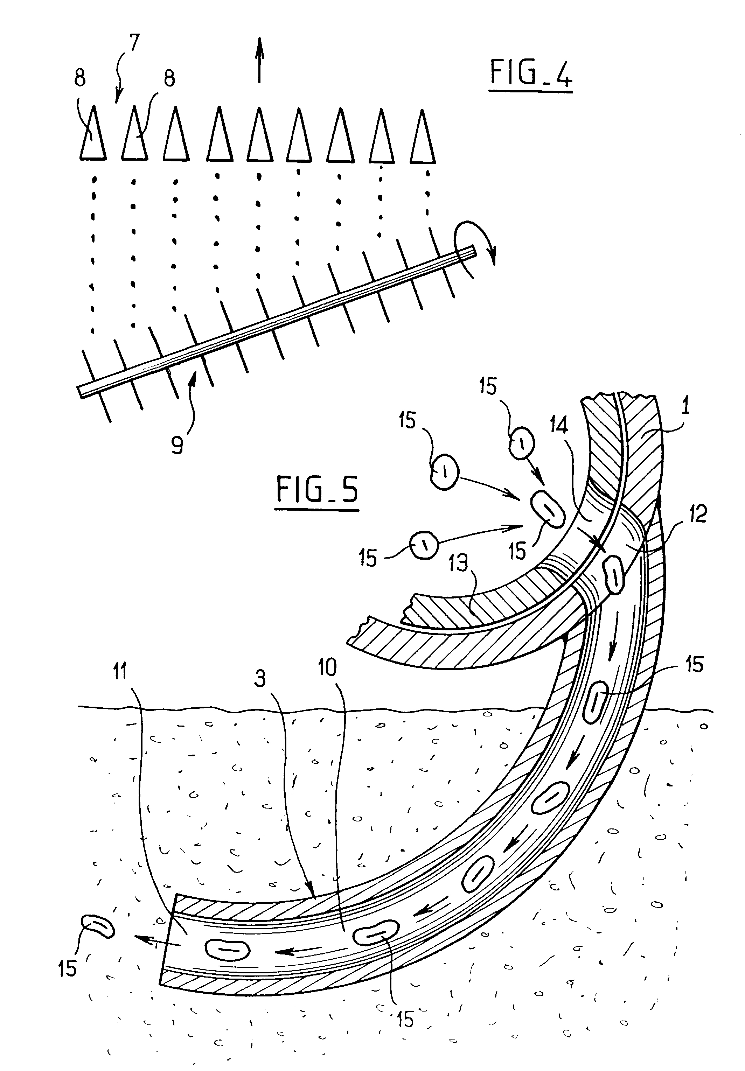

On a schématiquement représenté sur la figure 4 comment une herse rotative/rouleau 9 peut être avantageusement utilisée en combinaison avec un semoir en ligne 7 qui à la manière conventionnelle permet de mettre en terre des graines selon des lignes grâce à ses différents éléments 8.

La herse rotative/rouleau selon l'invention peut être placée devant ou derrière le semoir en ligne 7 conformément à l'invention, il est préférable que le mandrin soit disposé d'une manière légèrement inclinée par rapport à une perpendiculaire à la direction d'avancement du semoir.

Il est également préférable que la herse rotative/rouleau 9 soit disposée en arrière du semoir en ligne.

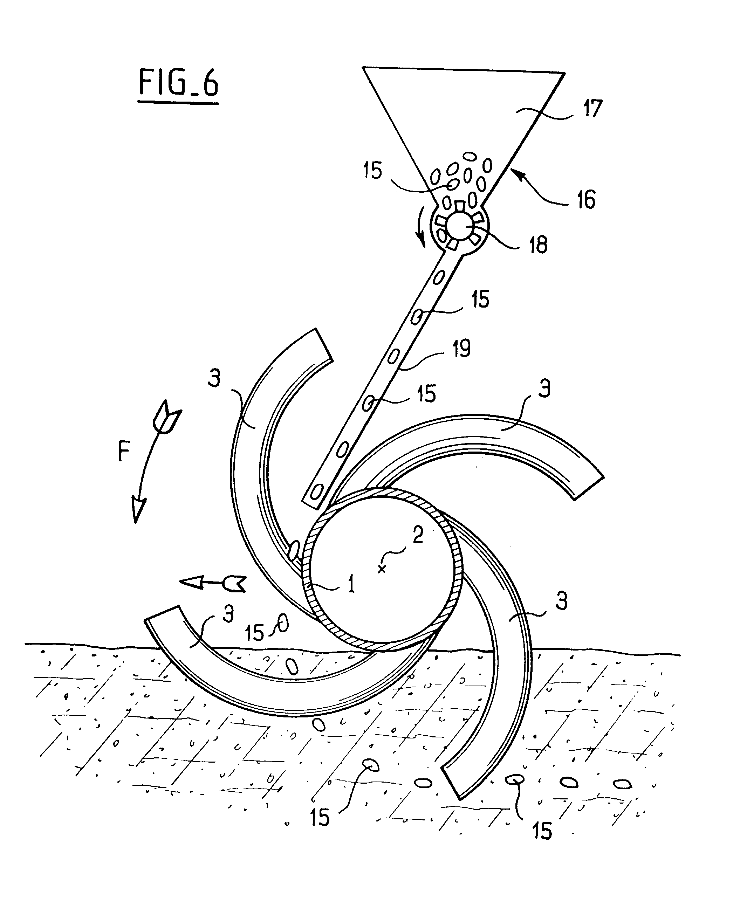

On a schématiquement représenté sur la figure 5 une variante perfectionnée de la herse rotative/rouleau qui fait également fonction de semoir.

Pour cela, l'outil 3 présente en son centre un canal 10 ouvert à son extrémité inférieure 11 et communiquant à son extrémité supérieure avec un orifice 12 réalisé dans la paroi du mandrin.

On a également représenté schématiquement sur la figure 5 une partie d'une enceinte tubulaire 13 qui est maintenue en position fixe à l'intérieur du mandrin 1.

La paroi de l'enceinte 13 comporte un orifice 14 qui communique avec l'orifice 12 et le canal 11 lorsque l'outil 3 est dans la position représentée sur la figure 5.

Conformément à l'invention, on envoie à l'intérieur de l'enceinte 13 un courant de fluide sous pression qui contient en suspension des graines 15 qui peuvent être par exemple des graines de céréales.

Lorsqu'au cours de cette rotation, le mandrin 1 amène son orifice 12 en correspondance avec l'orifice 14 de l'enceinte 13, le fluide sous pression propulse les graines 15 à l'intérieur du canal 10 qui est à l'intérieur de l'outil 3.

En raison de la rotation, l'orifice 12 cesse d'être en correspondance avec l'orifice 14 de l'enceinte 13 après le déplacement angulaire correspondant du mandrin et le fluide sous pression ne peut plus s'échapper par le canal 10 en entraînant les graines.

A ce moment, l'outil suivant non représenté qui se trouve sur la gauche de la figure 5 s'enfonce dans la terre et l'orifice 12 qui lui correspond vient se placer en face de l'orifice 14 du mandrin, ce qui poursuit l'amenée des graines dans le sol.

Conformément à l'invention, le fluide qui transporte les graines peut être un gaz comprimé tel que de l'air, mais il peut être également avantageusement de l'eau ce qui permet d'humidifier la paroi des graines et d'apporter une petite quantité d'eau autour de ces dernières dans le sol ce qui accélère et facilite leur germination.

Conformément à un autre mode de mise en oeuvre de l'invention, il est possible d'adapter aux nécessités, la quantité de graines ainsi introduite dans le sol en mélangeant ces dernières, par exemple avec du sable, ce mélange étant entraîné par le fluide sous pression.

Selon l'invention, il est également possible de régler le positionnement et la quantité de graines déposée dans le sol en modifiant le nombre et la position des outils ainsi que la section et la forme des orifices 12 et 14 qui constituent un robinet à boisseau tournant.

Dans un mode de mise en oeuvre particulier de l'invention on mélange des granulés, tels que du sable, aux graines qui sont transportées par le fluide, ce qui leur assure une répartition plus régulière.

Dans une variante, on ajoute du fluide un épaississant un émulsionnant ou un gélifiant pour stabiliser la répartition des graines dans le fluide et assurer une meilleure répartition du semis.

Dans la variante représentée sur la figure 6, on dispose au dessus de la herse rotative un distributeur de graines 16 qui comporte une trémie 17 recevant les graines 15 tandis qu'un distributeur rotatif 18 envoie les graines 15 à intervalles réguliers dans des tubulures 19 qui les déposent en avant du mandrin 1. Les tubulures 19 sont situées entre les trajectoires des outils tournants 3.

L'axe de la herse rotative utilisée comme semoir peut être soit perpendiculaire à la direction d'avancement de l'engin, soit faire un angle avec cette direction qui est différent de 90°.

Dans ce dernier cas, il est avantageux de réaliser les extrémités des outils tournants (3) de manière à ce que le plan de chaque extrémité soit perpendiculaire à la direction d'avancement de l'engin au moment où l'outil (3) est dans sa position basse et où il dépose les graines dans le sol.

La mise en place des graines s'en trouve ainsi facilitée.

On comprend qu'avec une série de tels dispositifs répartis le long de la herse rotative, on peut déposer à intervalles réguliers des lignes de graines qui sont mises en terre par l'effet de la herse rotative/rouleau selon l'invention.

Il est bien entendu que les modes de réalisation qui ont été décrits ci-dessus ne présentent aucun caractère limitatif et qu'ils pourront recevoir toutes modifications désirables sans sortir pour cela du cadre de l'invention.

En particulier, il est clair que la forme générale des outils n'a pas besoin d'être circulaire au sens géométrique du terme et qu'il suffit que ces outils aient une forme convexe dont les extrémités correspondent aux caractéristiques de l'invention.

De même, la section des outils peut être de formes diverses.

Enfin, dans la variante constituant semoir, l'enceinte fixe qui est disposée à l'intérieur du mandrin et qui distribue les graines peut avoir différentes formes de manière à permettre dans chaque cas d'utilisation un entraînement optimal des graines par les fluides concernés.

## Revendications

1. Herse rotative/rouleau, du type dans lequel un mandrin tournant autour d'un axe sensiblement horizontal supporte une pluralité d'outils qui sont fixés sur le pourtour du mandrin dans des directions sensiblement radiales, caractérisée par le fait que dans un plan perpendiculaire à l'axe du mandrin (1), les outils (3) ont une forme sensiblement en arc de cercle, la tangente à l'extrémité (3a) convexe centrale de chaque outil formant à son point de contact avec le mandrin (1) un angle faible (A) avec la tangente à la surface du mandrin (1) en ce point et la tangente à l'extrémité (3d) convexe externe de l'outil formant un angle voisin de 90° avec la ligne radiale qui rejoint l'extrémité convexe de l'outil (3b) à l'axe du mandrin (2).

2. Herse rotative/rouleau selon la revendication 1, caractérisée par le fait que la tangente à l'extrémité (3a) convexe centrale de l'outil (3) à son point de raccordement avec le mandrin (1) fait avec la tangente à ce dernier un angle compris entre 20 et 30°, tandis que l'extrémité (3b) externe convexe de l'outil a une tangente qui fait un angle de 70 à 90° avec la ligne radiale qui relie l'extrémité (3b) externe convexe de l'outil (3) à l'axe (2) du mandrin.

3. Herse rotative/rouleau selon l'une quelconque des revendications précédentes, caractérisée par le fait que les outils (3) sont disposés par groupe par exemple de quatre dans des plans parallèles perpendiculaires à l'axe du mandrin.

4. Herse rotative/rouleau selon la revendication 3, caractérisée par le fait que les groupes d'outils sont décalés angulairement l'un par rapport à l'autre.

5. Herse rotative/rouleau selon l'une quelconque des revendications précédentes, caractérisée par le fait que le mandrin est monté libre en rotation sur son axe.

6. Herse rotative/rouleau selon l'une quelconque des revendications 1 à 4, caractérisée par le fait que le mandrin est entraîné positivement en rotation à une vitesse qui est supérieure, par exemple d'environ 20 à 150 %, à la vitesse de rotation que l'engin prendrait spontanément en étant tracté sur le sol en raison de la résistance à l'avancement qui résulte de l'enfoncement des outils (3) dans le sol.

7. Herse rotative/rouleau selon l'une quelconque des revendications précédentes, caractérisée par le fait qu'une pièce d'usure est rapportée sur la face avant de chaque outil (3).

8. Herse rotative/rouleau selon l'une quelconque des revendications 1 à 7, caractérisée par le fait que l'outil est réalisé en une première partie (4) fixée au mandrin (1) et une seconde partie constituée par une pièce d'usure (5), fixée par un boulon (6).

9. Herse rotative/rouleau utilisable comme semoir, selon l'une quelconque des revendications 1 à 7, caractérisée par le fait que les outils (3) présentent une structure tubulaire (10) dont l'extrémité assujettie au mandrin (1) communique avec un orifice (12) de ce dernier, lequel orifice lors de la rotation de la herse rotative vient en communication avec un orifice fixe (14) communiquant avec une enceinte fixe (13) placée à l'intérieur du mandrin, de sorte que lorsque l'outil concerné est situé en partie basse avec son extrémité dans le sol, un jet de fluide tel que de l'air ou de l'eau contenant des graines (15) peut être injecté dans le canal intérieur (10) de l'outil (3) pour aboutir dans le sol, les graines étant ainsi transportées à l'endroit et à la profondeur voulue au fur et à mesure de l'avance de la herse rotative.

10. Herse rotative/rouleau selon la revendication 9 caractérisée par le fait que son axe de rotation fait avec la direction d'avancement un angle inférieur à 90°.

11. Herse rotative/rouleau selon la revendication 10 caractérisée par le fait que l'extrémité de la structure tubulaire (10) des outils (3) est découpée en biseau de sorte que lorsque cette extrémité se trouve dans la partie basse de sa trajectoire, le plan de cette découpe en biseau est sensiblement perpendiculaire à la direction d'avancement de la herse.

12. Herse rotative/rouleau selon l'une quelconque des revendications 9 à 11, caractérisée par le fait que les outils (3) ont une forme tubulaire sur toute leur longueur.

13. Herse rotative/rouleau selon la revendication 9, caractérisée par le fait que l'outil (3) a une forme tubulaire sur sa partie qui est raccordée au mandrin (1) alors que l'extrémité libre de l'outil présente une section ouverte analogue à celle d'une cuillère ou à un U.

14. Herse rotative/rouleau selon l'une quelconque des revendications 1 à 7, caractérisée par le fait qu'elle comporte un distributeur de graines (16) disposé au-dessus de la herse qui est muni de tubulures (19) passant entre les trajectoires des outils (3), pour amener les graines (15) sur le sol devant la herse rotative qui les enfouit.

15. Procédé pour réaliser simultanément les opérations de hersage, roulage et semage de graines, caractérisé par le fait que l'on envoie dans les canaux (10) pratiqués à l'intérieur des outils (3) de la herse rotative/rouleau selon l'une quelconque des revendications 9 à 14, un fluide sous pression transportant des graines (15) au moment où l'outil passe en position basse de sa course de manière à déposer les graines dans le sol.

16. Procédé selon la revendication 15, caractérisé par le fait que le fluide est constitué par un liquide tel que de l'eau ou par un gaz tel que de l'air.

17. Procédé selon l'une quelconque des revendications 15 et 16, caractérisé par le fait que les graines (15) sont mélangées à d'autres particules telles que du sable.

18. Procédé selon l'une quelconque des revendications 15 à 17, caractérisé par le fait que le fluide comporte un agent épaississant, gélifiant ou émulsionnant, qui le rend plus ou moins visqueux ou pâteux de manière à assurer une répartition plus uniforme des graines.
